# EUROPÄISCHE PATENTSCHRIFT

(11) **EP 0 784 923 B1**
(45) Veröffentlichungstag und Bekanntmachung des Hinweises auf die Patenterteilung: **01.12.1999**
(21) Anmeldenummer: 96120588.7
(22) Anmeldetag: 20.12.1996
(51) Int. Cl.: A01G 17/04

(54) **Halte- und Stützvorrichtung zur Befestigung von Bäumen und grossen Sträuchern auf Standorten mit vertikal begrenztem Substratvolumen (Flachdächer und Tiefgaragen)**
Holding and supporting device for fixing trees and large bushes on locations with vertically limited substrate volume (flat roofs and underground garages)
Dispositif de maintien et de support pour fixer des arbres et des grands arbustes sur des emplacements avec volume de substrat verticalement limité (toits plats et garages souterrains)

(30) Priorität: 05.01.1996 DE 19600282
(43) Veröffentlichungstag der Anmeldung: 23.07.1997
(73) Patentinhaber: Weisser, Helmut O., 72793 Pfullingen (DE)
(72) Erfinder: Weisser, Helmut O., 72793 Pfullingen (DE)

(56) Entgegenhaltungen:
- AT-B- 327 598
- DE-A- 3 534 077
- GB-A- 2 191 673

## Beschreibung

Die Erfindung bezieht sich auf eine Halte- und Stützvorrichtung zur Befestigung von Bäumen und großen Sträuchern gemäß dem Oberbegriff des Anspruchs 1. Eine durch bauliche Maßnahmen in Anspruch genommene Fläche kann durch eine Begrünung wenigstens teilweise wieder in den ökologischen Kreislauf einbezogen werden. Begrünte Zonen, und seien sie noch so klein, dienen Pflanzen, Tieren und Menschen als Refugium. Eine verstärkte Bindung von Staub und Schadstoffen durch die Pflanzen ist gerade in Ballungszentren zu einer lebensnotwendigen Prämisse geworden.

Dachbegrünungen unterliegen aufgrund ihrer exponierten Lagen individuellen Gesetzen, die mit herkömmlichen Pflanzmethoden nicht zu vergleichen sind. Bereits durch statische Voraussetzungen sind dem Substratvolumen Grenzen gesetzt. Daher ist es notwendig, ab einer bestimmten Baum- oder Strauchgröße mittels technischer Vorrichtungen für eine ausreichende Sicherung des Standvermögens zu sorgen.

Die bisher verwendeten und nachstehend aufgeführten Windwurfsicherungen lassen sich in den Kategorien Stamm- und Wurzelsicherungen zusammenfassen.

Eine Stammsicherung erfolgt entweder über eine Hochpfahlanbindung oder Seilabspannung. Bei der Hochpfahlanbindung müssen in der Regel drei Pfähle um den zu sichernden Stamm, im Winkel von 120 Grad, gruppiert werden und mit einem Faserstrick oder Kunststoffband am Stamm angebunden werden. Die Schwierigkeiten bestehen darin, daß die Pfähle selbst eine Verankerung benötigen. Diese wird z.B. durch Einbringen von Betonfundamenten, in denen die Pfähle ruhen, erreicht.

Bei der Seilabspannung werden die vom Stamm zurückgeführten Seile an einem Gegenlager befestigt. Hierbei finden Betonplatten und auch Stahlgittermatten, die auf die Drainageschicht, bzw. im unteren Bereich des Substrats eingebracht werden, Verwendung (vgl. DE 35 34 077 A1). Eine Windwurfsicherung des Wurzelballens mit einem dreidimensionalen Korb nach der DE 27 58 441 C2 kann Großgehölze bei Wind noch nicht sicher auf Dachgärten halten und stützen, da das in den Korb einzusetzende Gehölz, bedingt durch die relativ groß ausgelegte Pflanzöffnung, keinen ausreichenden Halt findet. Speziell in der Anwachsphase benötigt Hochgrün eine uneingeschränkt sichere Verankerung. Eine weitere Möglichkeit ist die Sicherung mittels Erdanker nach der US 40 44 513. Die Erdanker werden ins Pflanzsubstrat eingetrieben und durch Zurückziehen verriegelt. Die dadurch zustandekommende Rückhaltekraft kann nur bedingt zur Standfestigkeit der Pflanze beitragen, da in den meisten Fällen die Erdüberdeckung zu gering ist. Außerdem kann eine Beschädigung der Dachabdichtung hierbei nicht ausgeschlossen werden.

Alle vorgenannten Haltemöglichkeiten, außer der US 40 44 513, haben den gemeinsamen Nachteil, daß sie möglichst vor der Substratschüttung installiert werden müssen. Ein nachträchliches Einbringen ist nur mit enormem Zeit- und Kostenaufwand zu realisieren.

Nach der Fertigstellung einer Neupflanzung, kommt es immer wieder vor, daß dominante Solitärgewächse zur Abrundung eines besseren Gesamtbildes oder anderen Gründen den Standort wechseln müssen. Auch das Hinzukommen eines oder mehrerer Großgewächse ist denkbar.

Der Erfindung liegt die Aufgabe zugrunde eine gattungsgemäße Halte- und Stützvorrichtung zur Befestigung von Bäumen und größeren Sträuchern auf Standorten mit vertikal begrenztem Substratvolumen zu schaffen, die an die Größe der Pflanze und des Wurzelballens anpaßbar ist, eine sichere Abstützung und Halterung auch bei starkem Wind gewährleistet und auch noch nach Substrataufbringung installiert werden kann.

Diese Aufgabe wird durch die kennzeichnenden Merkmale des Anspruchs 1 gelöst.

Weitere vorteilhafte Ausgestaltungen sind in den Unteransprüchen beschrieben.

Die erfindungsgemäße Halte- und Stützvorrichtung kann in jedem zeitlichen Stadium vor oder nach der Substrataufbringung installiert werden. Ein Pflanzloch, das unwesentlich größer als der Wurzelballen selbst ist, genügt, um die Halte- und Stützvorrichtung in Funktion zu nehmen. Bei bestehenden Anlagen, die von einer extensiven in eine intensive Begrünung überführt werden sollen, ist dies ohne umfangreiche Grabarbeiten möglich, sodaß erhaltungswürdige Flächen nicht beeinträchtigt werden. Aus pflanzenphysiologischer Sicht ist bei Nachpflanzungen von Hochgewächsen eine nicht umgebrochene Fläche günstiger zu bewerten, da aufgrund einer bereits stattgefundenen Durchwurzelung zusätzlicher Halt für die Neupflanze erbracht wird.

Die Halte- und Stützvorrichtung bietet volle Entwicklungsfreiheit, soweit dies Pflanzen ohne Tiefenwurzelung zugestanden werden kann. Da aber bei Dachbegrünungen nur Hochgewächse, die als sogenannte Flachwurzler gelten, in Frage kommen, kann von einer optimalen Standfestigkeit ausgegangen werden.

Zwischen der Halte- und Stützvorrichtung und der Pflanze, wird im Laufe der Jahre, nicht zuletzt durch die Verwendung umweltneutralen Materials, wie Kunststoffe und verzinkten Stahl, eine umgreifende und durchdringende Verwurzelung stattfinden. Der Baum oder größere Strauch findet ausreichenden Halt und dankt dies mit einer guten Entfaltung und hoher Lebenserwartung.

Die Ausführungen der Erfindung werden nachstehend anhand beigefügter Zeichnungen erläutert.

Es zeigt:

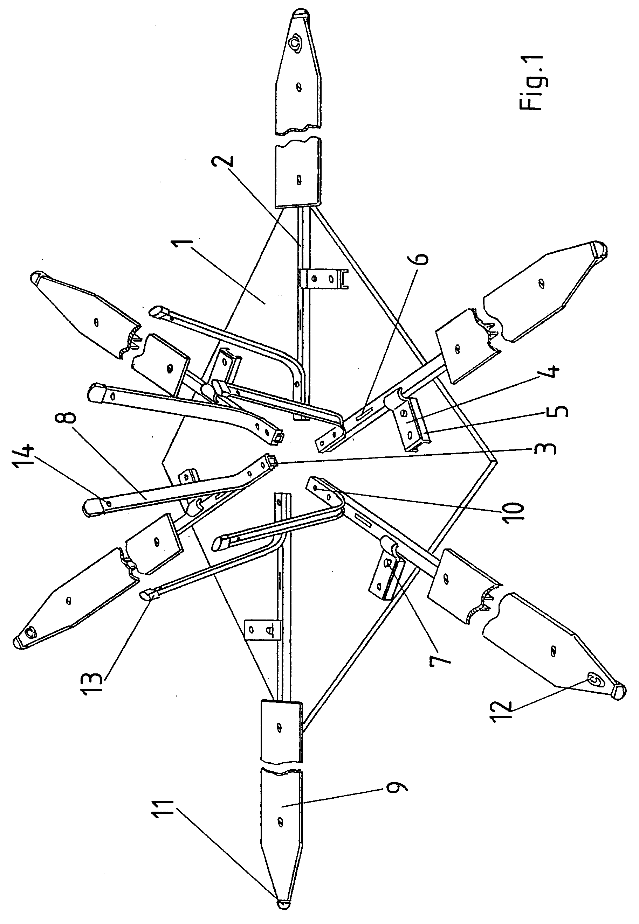

Fig.1 Gesamtdarstellung der Halte-und Stützvorrichtung
Fig.2 Einsetzen eines Stützstabes
Fig.3 Darstellung der dreifachen Halte-und Stützmöglichkeiten
Auf der mit 1 bezeichneten Grundplatte befinden sich sechs im Winkel von 60 Grad radial angeordnete Stützstäbe 2, die der Vergrößerung der Standfläche und somit der erhöhten Aufnahme des Kippmomentes bei Winddruck dienen. Das Aufschieben kann ohne Zuhilfenahme von Werkzeugen erfolgen. Bei erhöhtem Widerstand, z.B. bei bereits durchwurzeltem Substrat, können die Stützstäbe 2 auch mechanisch vorgetrieben werden. Die verbreiterte Abdeckung 9 führt im lockeren Substrat zu einer Erhöhung des Erddrucks. Eine Führung und Fixierung der Stützstäbe 2 wird durch die auf der Grundplatte 1 befestigten U-Profilleisten 3, die nach oben offen sind, erreicht. Die Stützstäbe 2 sind ebenfalls als U-Profil ausgelegt und überdecken gegenständig die U-Profilleisten 3. In die Stützstäbe 2 eingebrachte Schlitze 6 dienen zur abstandsbezogenen Arretierung mittels schwenkbarer Niederhalteplatten 4, die mit Lagerböcken 5 beweglich verbunden sind. Die Niederhalteplatte 4, die in den Schlitz 6 eingreift, wird über eine Schraube 7 mit der Grundplatte 1, in die eine Einschlagmutter eingelassen ist, verbunden. Die im Abstand von 50 mm angeordneten Schlitze 6 ermöglichen die Aufnahme variabler Wurzelballendurchmesser 18 (in dargestellter Version, 400 und 500 mm Durchmesser, deckt dieses den Großteil des üblichen Pflanzgutes ab). Maßliche Abänderungen nach unten und oben sind durch eine Modifizierung der Grundplatte 1 und der Stützstäbe 2 möglich.

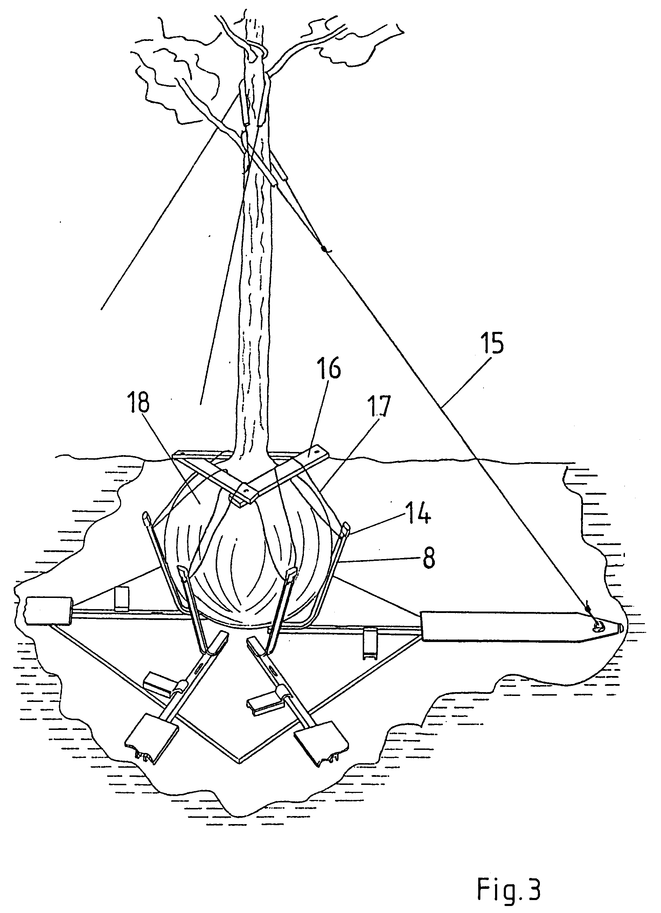

Der einzusetzende Wurzelballen 18 wird durch die nach oben offenen und mit einer Kappe 13 abgeschlossenen Haltebügel 8, die mit den Stützstäben 2 fest verbunden sind, durch konkave Konizität zentriert und fixiert. Die Halteschraube 10, die ebenfalls in die Grundplatte 1 eingeschraubt wird, unterstützt die Verschraubung 7 und sichert den Stützstab 2 zusätzlich gegen Verschieben nach innen bzw. nach außen bei radialem Zug oder Druck. Radialer Zug nach innen tritt vornehmlich über die drei mit einer Öse 12, zur Aufnahme von Abspannseilen 15, versehenen Stützstäbe 2 auf. Eine Gleit- und Abdeckkappe 11 verhindert beim Ausschieben des Halte- und Stützstabes 2 eine Beschädigung des die Drainageschicht überdeckenden Vlieses. Bei drei der sechs Stützstäbe 2 werden die Abspannseile 15, die bereits mit den Ösen 12 verbunden sind, mit ausgeschoben und zur Stammsicherung nach oben gezogen. Über die Haltebügel 8 ist eine weitere Fixierung des Wurzelballens 18, mittels eines Spanndrahtes 17, der Haltebügel 8 und ein über dem Wurzelballen 18 (Fig.3) anzubringendes Holzdreieck 16 miteinander verbindet, möglich. Dazu wird der Spanndraht 17, durch die im oberen Teil der Haltebügel 8 befindlichen Bohrungen 14 und über das in sich verschraubte Holzdreieck 16, mittels einer handelsüblichen Spannrätsche (nicht dargestellt) verbunden und eingespannt.

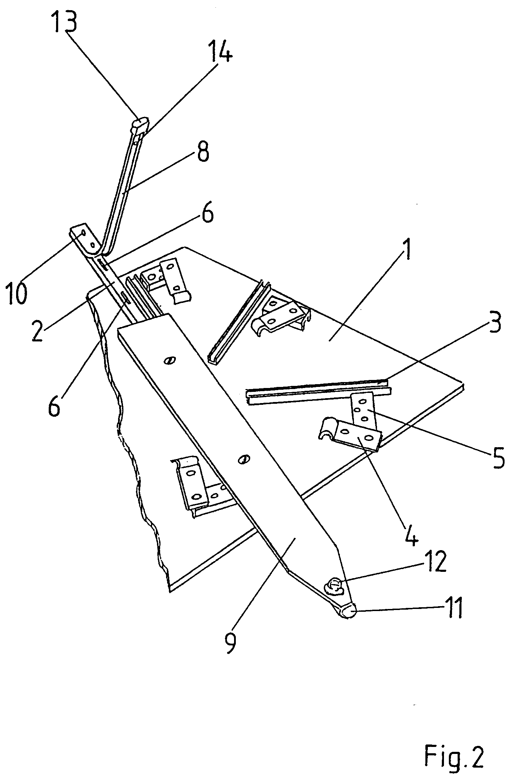

Fig.2 zeigt das raumsparende Einsetzen eines Stützstabes 2.

Durch den seitlichen Versatz der Führungsleisten 3 ist das Einsetzen aller sechs Stützstäbe 2 auf gleiche Weise möglich. Das bedeutet, daß die Pflanzgrube einen nur unwesentlich größeren Durchmesser als die Stützstablänge (800 mm) aufweisen muß.

Vor dem Einsetzen und Verfüllen des Wurzelballens 18 können auf die Grundplatte 1 Vliesstreifen aufgelegt werden, die eine Verbindung zum umliegenden Vlies herstellen und somit für eine schlüssige Wasser- und Nährstoffaufnahme im untersten Wurzelbereich sorgen.

Wie in Fig.3 dargestellt ergeben sich aus beschriebener Konstruktion drei Halte- und Stützvarianten:
a) Der Wurzelballen 18 wird ohne weitere Sicherung in die sich ergebende Aufnahmeöffnung der Haltebügel 8 eingesetzt. Dieses bietet sich bei Strauchgewächsen an, da hierbei, aufgrund ihrer geringeren Höhe, mit einem verminderten Winddruck zu rechnen ist.
b) In Verbindung mit dem über dem Wurzelballen 18 liegenden und seilverspannten Holzdreieck 16. Für mittlere Bäume (bis ca. 4 m) ist diese Verankerung ausreichend effizient. Außer dem optischen Vorteil kann die Grünfläche ohne Einschränkung durch eine oberirdische Stützmaßnahme in Anspruch genommen werden.
c) Eine zusätzliche Hochstammsicherung wird bei Bäumen ab einer Größe von 4 m, mittels dreier Abspannseile 15 erforderlich, dabei kann auf das mit dem Wurzelballen 18 verspannte Holzdreieck 16 verzichtet werden, dieses kann jedoch als Zusatzsicherung ebenfalls integriert sein. Die Abspannseile 15 werden, nachdem das Hochgrün angewachsen ist, in der Regel nach drei Jahren, entfernt, indem diese unterhalb der Erdoberfläche durchtrennt werden.

## Patentansprüche

1. Halte-und Stützvorrichtung zur Befestigung von Bäumen und großen Sträuchern auf Standorten mit vertikal begrenztem Substratvolumen, insbesondere auf Flachdächern und Dächern von Tiefgaragen, mit einer unterhalb des Wurzelballens angeordneten Grundplatte,
dadurch gekennzeichnet, daß auf der Grundplatte (1) in radialer Anordnung nach außen verschiebbare Stützstäbe (2) angeordnet sind, über die eine Vergrößerung der Standfläche erreicht wird und an denen Halterungen zur Befestigung eines Wurzelballens (18) und/ oder eines Stammes vorhanden sind.

2. Halte- und Stützvorrichtung nach Anspruch 1,
dadurch gekennzeichnet, daß auf der Grundplatte (1) sechs nach außen verschiebbare Stützstäbe (2) vorgesehen sind, die in einem Winkel von jeweils 60 Grad angeordnet sind.

3. Halte- und Stützvorrichtung nach Anspruch 1 oder 2,
dadurch gekennzeichnet, daß zur Halterung des Wurzelballens (18) an den Stützstäben (2) schräg nach oben weisende Haltebügel (8) befestigt sind, die zusammen eine Aufnahme für den Wurzelballen (18) bilden und deren Stellung mittels der variabel verschiebbaren Stützstäbe (2) der jeweiligen Wurzelballengröße anpaßbar ist.

4. Halte- und Stützvorrichtung nach Anspruch 3,
dadurch gekennzeichnet, daß zur Wurzelballenfixierung auf dem Wurzelballen (18) ein Holzdreieck (16) angeordnet ist, das mittels eines Spanndrahts (17) mit den Haltebügeln (8) verbunden ist.

5. Halte- und Stützvorrichtung nach einem der vorhergehenden Ansprüche,
dadurch gekennzeichnet, daß die Halterung des Stamms über Abspannseile (15) erfolgt, die an den äußeren Enden der nach außen verschiebbaren Stützstäbe (2) befestigt sind.

6. Halte- und Stützvorrichtung nach Anspruch 5,
dadurch gekennzeichnet, daß die Stützstäbe (2) zur Befestigung der Abspannseile (15) an den äußeren Enden mit Ösen (12) versehen sind.

7. Halte- und Stützvorrichtung nach einem der vorhergehenden Ansprüche,
dadurch gekennzeichnet, daß die Stützstäbe (2) in nach oben offenen U-Profilleisten (3) geführt sind, die auf der Grundplatte (1) befestigt sind.

8. Halte- und Stützvorrichtung nach Anspruch 7,
dadurch gekennzeichnet, daß die Stützstäbe (2) ebenfalls als U-Profil ausgelegt sind und die auf der Grundplatte befestigten U-Profilleisten (3) gegenständig überdecken.

9. Halte- und Stützvorrichtung nach Anspruch 7 oder 8,
dadurch gekennzeichnet, daß die Stützstäbe (2) Schlitze (6) aufweisen, die zur abstandsbezogenen Arretierung mittels einer schwenkbaren Niederhalteplatte (4), die auf der Grundplatte (1) befestigt ist, dienen.

10. Halte- und Stützvorrichtung nach einem der vorhergehenden Ansprüche,
dadurch gekennzeichnet, daß die Stützstäbe (2) mittels einer Halteschraube (10) auf der Grundplatte (1) zur Sicherung gegen radiales Verschieben befestigt sind.

11. Halte- und Stützvorrichtung nach einem der vorhergehenden Ansprüche,
dadurch gekennzeichnet, daß die Stützstäbe (2) eine verbreiterte Abdeckung zur Erhöhung des Erddrucks aufweisen.

12. Halte- und Stützvorrichtung nach einem der vorhergehenden Ansprüche,
dadurch gekennzeichnet, daß die Stützstäbe (2) an ihrem äusseren Ende eine Gleit- und Abdeckkappe (11) aufweisen.

13. Halte- und Stützvorrichtung nach einem der vorhergehenden Ansprüche,
dadurch gekennzeichnet, daß die Wurzelballenhalterungen und die Stammhalterung miteinander kombiniert werden können.

14. Halte- und Stützvorrichtung nach einem der vorhergehenden Ansprüche,
dadurch gekennzeichnet, daß diese aus Kunststoff und verzinktem Stahl besteht.

15. Halte- und Stützvorrichtung nach einem der vorhergehenden Ansprüche,
dadurch gekennzeichnet, daß auf die Grundplatte (1) Vliesstreifen aufgelegt sind, um eine Verbindung zu einem umliegenden Vlies zur Wasser- und Nährstoffversorgung im unteren Wurzelbereich sicherzustellen.

16. Halte- und Stützvorrichtung nach einem der vorhergehenden Ansprüche,
dadurch gekennzeichnet, daß bei Einsetzen des Baumes oder des Strauches in eine Pflanzgrube diese nur einen etwas größeren Durchmesser als die Länge eines Stützstabes (2) benötigt, wobei das Einsetzen der Stützstäbe (2) erst nach Einsetzen der Grundplatte (1) erfolgt.

## Claims

1. Holding and supporting device for anchoring trees and large shrubs at locations where the substrate soil is vertically limited in volume, particularly on flat roofs and the roofs of subterranean garages; has a base plate below the root bale, with the feature that the base plate (1) has radially arranged, outwardly extendable supporting rods (2) which enlarge the area of support; these are equipped with holding devices for attaching a root bale (18) and/or a tree trunk.

2. Holding and supporting device as in Claim 1,
with the feature that the base plate (1) is designed for six outwardly extendable supporting rods (2), each arranged at an angle of 60 degrees.

3. Holding and supporting device as in Claim 1 or 2,
with the feature that in order to retain the root bale (18) the supporting rods (2) are equipped with retaining loops which point obliquely upwards (8); together, these provide a receptacle for the root bale (18), and their positions can be adjusted for individual root bale sizes by means of the variably moveable supporting rods (2).

4. Holding and supporting device as in Claim 3,
with the feature that anchoring of the root bale is achieved on the root bale (18) with a wooden triangle (16) which is connected by a guy wire (17) to the retaining loops (8).

5. Holding and supporting device as in one of the previous Claims,
with the feature that anchoring the trunk is achieved by guy wires (15) which are attached to the outer ends of the outwardly extendable supporting rods (2).

6. Holding and supporting device as in Claim 5,
with the feature that the supporting rods (2) for attachment of the guy wires (15) have eyelets at their outer ends (12).

7. Holding and supporting device as in one of the previous Claims,
with the feature that the supporting rods (2) run in U-Channel strips which are open at the top (3) and are attached to the base plate (1).

8. Holding and supporting device as in Claim 7,
with the feature that the supporting rods (2) are also in the form of U-channel strips and form the opposite half, covering the U-channel strips (3) which are attached to the base plate.

9. Holding and supporting device as in Claim 7 or 8,
with the feature that the supporting rods (2) have slots (6) which are used for regularly spaced retention by means of a rotatable pressure plate (4) which is mounted on the base plate (1).

10. Holding and supporting device as in one of the previous Claims,
with the feature that the supporting rods (2) are fastened by means of a check screw (10) to the base plate (1) in order to ensure that there is no radial shifting.

11. Holding and supporting device as in one of the previous Claims,
with the feature that the supporting rods (2) have a broader cover in order to increase the pressure of the earth.

12. Holding and supporting device as in one of the previous Claims,
with the feature that the supporting rods (2) have a sliding cap and a protective cover (11) at their outer ends.

13. Holding and supporting device as in one of the previous Claims,
with the feature that the root bale holders and the trunk holder can be combined with each other.

14. Holding and supporting device as in one of the previous Claims,
with the feature that this is made of plastic and galvanized steel.

15. Holding and supporting device as in one of the previous Claims,
with the feature that strips of fleece are attached to the base plate (1), thus ensuring contact via surrounding fleece material with a supply of water and nutrients in the lower root area.

16. Holding and supporting device as in one of the previous Claims,
with the feature that when the tree or shrub is placed in a planting hole, the latter need be only slightly larger in diameter than the length of a supporting rod (2), and the positioning of the supporting rods (2) takes place only after the base plate (1) has been put in position.

## Revendications

1. Dispositif de support et d'appui pour la fixation d'arbres et de grands arbrisseaux sur des endroits de profondeur limitée pour l'adjonction des substances nutritives, surtout sur des toits plats ou de garages souterrains, avec une plaque de fond placée au dessous des racines, caractérisé par la disposition radiale de barres de support et d'appui coulissantes à l'extérieur (2) sur la plaque de base (1). Ces barres de support qui permettent d'agrandir la surface de soutien sont pourvues de fixations pour les racines (18) et/ou le tronc.

2. Dispositif de support et d'appui d'après revendication 1,
caracterisé par le placement de six barres d'appui coulissantes à l'extérieur (2) sur la plaque de fond (1). Chacune de ces barres est placée en angle de 60 degrées.

3. Dispositif de support et d'appui d'après revendication 1 ou 2,
caractérisé par la disposition d'étriers de retenue obliques montants (8) fixés aux barres d'appui (2) afin de soutenir les racines (18), et qui retiennent les racines (18) et dont la position peut être adaptée au volume respectif des racines au moyen des barres de support de coulissement variable (2).

4. Dispositif de support et d'appui d'après revendication 3,
caractérisé par le placement d'un triangle en bois (16) au dessus des racines (18) pour leur fixation. Ce triangle est uni aux étriers de retenue (8) au moyen d'un câble de serrage (17).

5. Dispositif de support et d'appui d'après une des revendications susmentionnées,
caracterisé par le support du tronc au moyen de haubans (15) qui sont fixés aux extrémités des barres de support coulissantes à l'extérieur (2).

6. Dispositif de support et d'appui d'après revendication 5,
caractérisé par le placement d'oeillets (12) aux extrémités des barres de support (2) pour fixer les haubans (15).

7. Dispositif de support et d'appui d'après une des revendications susmentionnées,
caracterisé par le guidage des barres de support (2) dans des profilés en U ouverts vers le haut (3) qui sont fixés à la plaque de fond (1).

8. Dispositif de support et d'appui d'après revendication 7,
caractérisé par la construction de barres de support (2) elles-même aussi en profilé en U qui couvrent à l'inverse les profilés en U (3) fixés à la plaque de fond.

9. Dispositif de support et d'appui d'après revendication 7 ou 8,
caractérisé par l'existence de fentes (6) aux barres de support (2) qui servent à assurer l'arrêt relatif à l'écartement au moyen d'une plaque de pression pivotable (4) qui est fixée à la plaque de fond (1).

10. Dispositif de support et d'appui d'après une des revendications susmentionnées,
caracterisé par une vis d'arrêt (10) qui fixe les barres de support (2) à la plaque de fond (1) pour éviter un coulissement radial.

11. Dispositif de support et d'appui d'après une des revendications susmentionnées,
caracterisé par un recouvrement plus large des barres de support (2) afin d'augmenter la pression sur la terre.

12. Dispositif de support et d'appui d'après une des revendications susmentionnées,
caracterisé par une calotte de coulissement et de recouvrement (11) montée à l'extrémité des barres de support (2).

13. Dispositif de support et d'appui d'après une des revendications susmentionnées,
caracterisé par la possibilité de combiner les supports des racines et ceux du tronc.

14. Dispositif de support et d'appui d'après une des revendications susmentionnées,
caracterisé par sa fabrication en matière plastique et acier zingué.

15. Dispositif de support et d'appui d'après une des revendications susmentionnées,
caracterisé par la mise de bandes de toison sur la plaque de fond (1) qui établissent la connexion à une toison jointe pour assurer l'alimentation d'eau et de substances nutritives des racines profondes.

16. Dispositif de support et d'appui d'après une des revendications susmentionnées,
caracterisé par le besoin de prévoir un trou de plantation pour l'arbre ou l'arbrisseau d'un diamètre un peu plus grand que la longueur d'une barre de support (2). Les barres de support (2) ne se montent qu'après l'installation de la plaque de fond (1).
